# EUROPEAN PATENT APPLICATION

(11) **EP 4 851 452 A1**
(43) Date of publication of application: **09.12.2026**
(21) Application number: 24921647.4
(22) Date of filing: 20.11.2024
(51) Int. Cl.: F03B 3/18

(54) **WATER PUMP TURBINE SIMULATION DEVICE, AND WATER PUMP TURBINE SIMULATION SYSTEM AND CONTROL METHOD THEREFOR**

(30) Priority: 04.02.2024 CN 202410156528
(71) Applicant: Dongfang Electric Machinery Co., Ltd., Deyang, Sichuan 618000 (CN)
(72) Inventor: LIANG, Quanwei, Deyang, Sichuan 618000 (CN); XUN, Hongyun, Deyang, Sichuan 618000 (CN); LIU, Wenli, Deyang, Sichuan 618000 (CN); YIN, Guojun, Deyang, Sichuan 618000 (CN); LIU, Jin, Deyang, Sichuan 618000 (CN); LIN, Fangzhou, Deyang, Sichuan 618000 (CN); HU, Jiangyi, Deyang, Sichuan 618000 (CN); HE, Qiyuan, Deyang, Sichuan 618000 (CN); CHENG, Huan, Deyang, Sichuan 618000 (CN); WANG, Zhaoning, Deyang, Sichuan 618000 (CN); WANG, Yang, Deyang, Sichuan 618000 (CN)
(74) Representative: Herrmann, Daniel
(86) International application number: PCT/CN2024/133325
(87) International publication number: WO 2025/161625

(57) **Abstract**

The application provides a pump-turbine simulation apparatus, a pump-turbine simulation system, and a control method. The pump-turbine simulation apparatus includes a model top cover, a crank arm, a guide vane, a driving ring and a driving assembly. A plurality of the crank arms are arranged at equal intervals along a circumferential direction of the model top cover, an end of the crank arm is hinged to the model top cover, and a guide vane shaft is fixedly connected to each crank arm. The guide vane shaft extends through the model top cover along a thickness direction, and is rotatably connected to the model top cover. Each guide vane is fixedly connected to a corresponding one guide vane shaft, and the guide vane is located on a side of the model top cover away from the crank arm. The driving ring is arranged around the model top cover, the other end of the crank arm is fixedly connected to the driving ring, and the driving assembly is configured to drive the driving ring to rotate around its center.

## Description

This application claims priority to Chinese Patent Application No. 202410156528.1 filed with the Chinese Patent Office on February 04, 2024, the entire contents of which are incorporated herein by reference.

### TECHNICAL FIELD

The present application relates to the technical field of pump turbines, and more particularly, to a pump-turbine simulation apparatus, a pump-turbine simulation system, and a control method.

### BACKGROUND

Pump turbines are power machines that convert between hydraulic energy and rotational mechanical energy. As one of the most critical components in hydropower industries, research and testing of the pump turbines are greatly important. In the research and testing of existing pump-turbine hydraulic models, performance parameters such as flow rate of the pump turbine, output power of the turbine, input power of the pump, and efficiency of the pump turbine are mainly evaluated. However, these parameter performances are related to an opening size between movable guide vanes of the pump turbine. The related parameter performances of the pump turbine can be controlled by controlling the opening size between the movable guide vanes.

### TECHNICAL SOLUTION

However, existing pump-turbine simulation apparatuses cannot adjust the opening size between the guide vanes in real time during testing.

The present application provides a pump-turbine simulation apparatus including a model top cover; a plurality of crank arms, where the plurality of crank arms are arranged at equal intervals along a circumferential direction of the model top cover, an end of each of the plurality of crank arms is hinged to the model top cover, a guide vane shaft is fixedly connected to the each of the plurality of crank arms, the guide vane shaft is extended through the model top cover along a thickness direction of the module top cover, and the guide vane shaft is rotatably connected to the model top cover; a plurality of guide vanes, where each of the plurality of guide vanes is fixedly connected to a corresponding one guide vane shaft, and the plurality of guide vanes are located on a side of the model top cover away from the plurality of crank arms; a driving ring disposed around the module top cover, where another end of the each of the plurality of crank arms is fixedly connected to the driving ring; and a driving assembly configured to drive the driving ring to rotate about a center of the driving ring.

The present application also provides a pump-turbine simulation system including the pump-turbine simulation apparatus described above; and a control module, where the driving assembly is connected to the control module, and the control module is configured to control the driving assembly to drive the driving ring to rotate based on working conditions of the pump-turbine simulation apparatus.

The present application further provides a control method configured to control the above-described pump-turbine simulation system, including: obtaining information on the working conditions of the pump-turbine simulation apparatus; and adjusting a size value of a guide vane opening of the pump-turbine simulation apparatus based on the information on the working conditions.

### BENEFICIAL EFFECT

According to the pump-turbine simulation apparatus provided by the present application, the driving ring drives the crank arms to rotate, then the crank arms drive the guide vane shafts to rotate, and finally the guide vane shafts drive the guide vanes to rotate, to adjust the opening size between adjacent guide vanes in an experimental process.

### BRIEF DESCRIPTION OF THE DRAWINGS

FIG. 1 is a schematic structural diagram of a pump-turbine simulation apparatus according to the present application;
FIG. 2 is a schematic structural diagram (bottom view) of a pump-turbine simulation apparatus according to the present application;
FIG. 3 is a schematic structural diagram of a model top cover and a driving ring according to the present application;
FIG. 4 is a schematic structural diagram of a driving assembly according to the present application; and
FIG. 5 is a schematic structural diagram of a pump-turbine simulation system of the present application.

Reference Numerals:
100. model top cover; 200. crank arm; 300. guide vane shaft; 400. guide vane; 500. driving ring; 60. driving assembly; 600. supporting member; 601. driving rod; 602. first stopper; 603. second stopper; 604. braking member; 700. driving member; and 800. angular displacement sensor.

### DETAILED DESCRIPTION OF THE EMBODIMENTS

In the description of the present application, unless otherwise expressly defined and defined, the terms "link", "connect", "fix" are to be understood in a broad sense, for example, as a fixed connection, as a detachable connection, or as a whole; may be as a mechanical connection or an electrical connection; may be as a directly connection or indirectly connection by means of an intermediate medium; may be as internal communication of the two elements or interaction of the two elements. The specific meaning of the above terms in the present application may be understood by one of ordinary skilled in the art as the case may be.

In the description, unless otherwise expressly defined and defined, that the first feature is "on" or "under" the second feature includes that the first feature may direct contact the second feature, as well as that the first feature indirect contact the second feature by an additional feature therebetween. Moreover, that the first feature is "over", "above" or "on" the second feature includes that the first feature directly above and obliquely above the second feature, as well as that the first feature is higher than the second feature. That the first feature is "down", "below" or "under" the second feature includes that the first feature directly below and obliquely above the second feature, as well as that the first feature is lower than the second feature.

In the description of the embodiments, the orientation or the positional relationship with the terms " up", " down", " left ", " right ", " front ", " rear ", is based on the orientation or the positional relationship in the drawings. The terms are used for description and brief, rather than indicating or implying the device or the element referred to has a special orientation, or configured and operated in a special orientation. Thus, these terms should not be understood as limitation on the present application. Furthermore, the terms "first" and "second" are used to distinguish between descriptions and have no particular meaning.

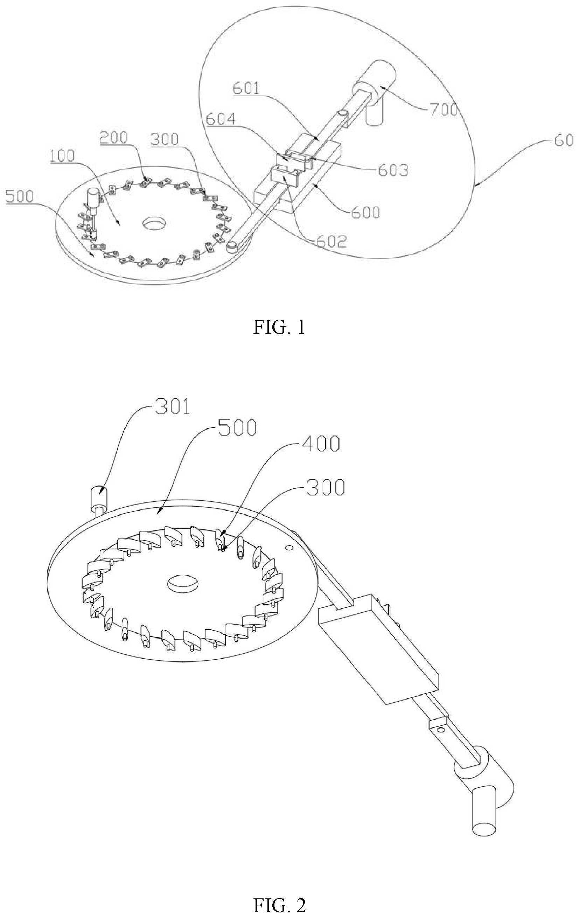

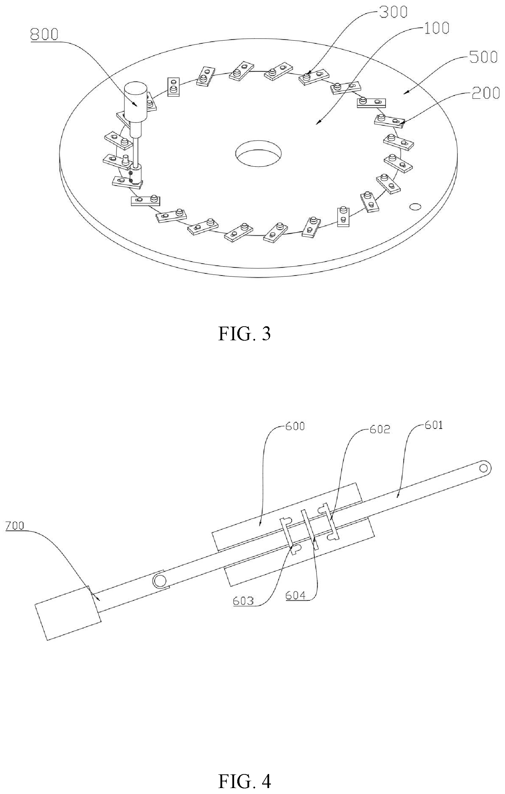

As shown in FIGS. 1 to 4, the present application provides a pump-turbine simulation apparatus. The pump-turbine simulation apparatus includes a model top cover 100, a plurality of crank arms 200, a plurality of guide vanes 400, a driving ring 500, and a driving assembly 60. The plurality of crank arms 200 are provided at equal intervals along the circumferential direction of the module top cover 100, an end of each of the crank arms 200 is hinged to the module top cover 100, and a guide vane shaft 300 is fixedly connected to each of the crank arms 200. The guide vane shaft 300 is extended through the module top cover 100 along the thickness direction of the module top cover 100, and the guide vane shaft 300 is rotatably connected to the module top cover 100. Each of the guide vanes 400 is fixedly connected to a corresponding one guide vane shaft 300, and the guide vanes 400 are located on the side of the model top cover 100 away from the crank arms 200. The driving ring 500 is disposed around the module top cover 100, and the other end of each of the crank arms 200 is fixedly connected to the driving ring 500. The driving assembly 60 is configured to drive the driving ring 500 to rotate about its center.

It should be noted that the number of the crank arms 200, the number of the guide vane shafts 300, and the number of the guide vane 400 are the same. The module top cover 100 is in the form of a circular disk, and the crank arms 200 are disposed at equal intervals along the outer edge of the circular disk. The crank arms 200 are disposed on a side of the module top cover 100, and the guide vanes 400 are disposed on another side of the module top cover 100 away from the crank arms 200. The driving ring 500 is a circular ring, and since the driving ring 500 is fixedly connected to the ends of the crank arms 200 and the crank arms 200 are hinged to the module top cover 100, the crank arms 200 rotate with the ends of the crank arms 200 hinged to the module top cover 100 as the driving ring 500 rotates. Since the guide vane shafts 300 are rotatably connected to the module top cover 100 and each of the guide vane shafts 300 is fixedly connected to a corresponding one crank arm 200, each of the crank arms 200 drives a corresponding one guide vane shaft 300 to rotate and the guide vane shaft 300 drives a corresponding one guide vane 400 to rotate. As such, a spacing between adjacent guide vanes 400 can be adjusted, and the opening size between adjacent guide vanes 400 can be adjusted accordingly.

It should be understood that, in the pump-turbine simulation apparatus, the driving ring 500 drives the crank arms 200 to rotate, then the crank arms 200 drive the guide vane shafts 300 to rotate, and finally the guide vane shafts 300 drive the guide vanes 400 to rotate, thereby realizing the adjustment of the opening size between adjacent guide vanes 400 during the experimental process.

In some embodiments, the driving assembly 60 includes a driving rod 601, an end of the driving rod 601 is connected to the driving ring 500, and the other end of the driving rod 601 is connected to a driving member 700. The driving member 700 is configured to drive the driving rod 601 to move in a first direction to drive the driving ring 500 to rotate.

It should be noted that the end of the driving rod 601 is connected to a side of the driving ring 500, and the movement of the driving rod 601 in the first direction is the linear movement. Since the end of the driving rod 601 is connected to the driving ring 500, with the movement of the driving rod 601, the linear movement is converted into the rotational movement of the driving ring 500. As such, the opening size between adjacent guide vanes 400 is adjusted.

The driving member 700 is a kind of a telescopic mechanism for driving the driving rod 601 to linearly move in the first direction. For example, the telescopic mechanism is a telescopic cylinder. Alternatively, the telescopic mechanism includes a motor, a gear, and a rack, where the gear is connected to the rotating shaft of the motor, the rack is meshed with the gear, the linear movement of the rack is realized by rotation of the motor, and the rack is connected to the driving rod 601 to realize the linear movement of the driving rod 601.

In some embodiments, the driving rod 601 is configured to reciprocate between a first position and a second position.

It should be noted that the movement of the driving rod 601 between the first position and the second position in the first direction restricts the movable range of the driving rod 601 and further restricts the rotational angle of the driving ring 500, so that the driving ring 500 can rotate only within a fixed angle. Since the guide vanes 400 follow the guide vane shafts 300 to rotate, the rotational angles of the guide vanes 400 are restricted and the opening size between adjacent guide vanes 400 are prevented from excessive rotation. As such, the opening size between adjacent guide vanes 400 can be adjusted to a same set value through a plurality of times of the reciprocating motions.

In some embodiments, the driving assembly 60 further includes a supporting member 600, the driving rod 601 is slidably connected with the supporting member 600, and the supporting member 600 is provided with a first stoper 602 and a second stoper 603 spaced apart. The first stoper 602 and the second stoper 603 are configured to limit the movable range of the side of the driving rod 601 between the first position and the second position.

It should be understood that by providing the first stoper 602 and the second stoper 603 to block the movement of the driving rod 601, the movable range of the side of the driving rod 601 is prevented from crossing the first position and the second position.

Specifically, for example, a first blocker and a second blocker are respectively provided on ends of the driving rod 601, the first blocker is located on a side of the first stopper 602 close to the second stopper 603, and the second blocker is located on a side of the second stopper 603 close to the first stopper 602. The first blocker is configured to abut the first stopper 602 when the driving rod 601 moves from the second position to the first position, so that the driving rod 601 can be limited to the first position. The second stopper is configured to abut the second stopper 603 when the driving rod 601 moves from the first position to the second position, so that the driving rod 601 can be limited to the second position.

In some embodiments, the driving rod 601 is provided with a braking member 604 positioned between the first stoper 602 and the second stoper 603. When the braking member 604 moves to the first position, the braking 604 abuts the first stoper 602; and when the driving rod 601 moves to the second position, the braking member 604 abuts the second stop 603.

It should be understood that the first stoper 602, the braking member 604, and the second stoper 603 are on the same straight line in the first direction, so that the first stoper 602 and the second stoper 603 can abut the braking member 604 to limit the movable range of the side of the driving rod 601.

In some embodiments, the first stopper 602 is a first potentiometer on which a first contact is provided, and the second limiting member 603 is a second potentiometer on which a second contact is provided. The first potentiometer and the second potentiometer are both connected to the driving member 700. The braking member 604 is configured to contact the first contact and the second contact, and the driving member 700 stops driving the driving rod 601 once the braking member 604 contacts either of the first contact and the second contact.

It should be understood that both the first potentiometer and the second potentiometer are connected to a control center (e.g., a computer) of the pump-turbine simulation apparatus to feed back information that the braking member 604 contacts the first contact or the second contact to the control center. As such, the control center can control the driving rod 601 to stop moving.

For example, the driving member 700 includes a motor, a gear connected to a rotating shaft of the motor, and a rack meshed with the gear. The rack realizes the linear movement by the rotation of the motor, and since the rack is connected to the driving rod 601, the linear movement of the driving rod 601 is realized. The motor is connected to the control center, and when the control center receives the information that the braking member 604 contacts the first contact or the second contact, the control center controls the motor to stop the rotation, thereby stopping the driving rod 601 in the first position or the second position.

In some embodiments, the supporting member 600 is provided with a sliding groove in which the driving rod 601 is disposed, the first stoper 602 and the second stoper 603 are spaced at the top of the sliding groove, and the braking member 604 is disposed on the driving rod 601 and between the first stoper 602 and the second stoper 603.

In some embodiments, an angular displacement sensor 800 is provided on at least two guide vane shafts 300 of the pump-turbine simulation apparatus.

It should be noted that the angular displacement sensor 800 is located on a side of the module top cover 100 away from the guide vanes 400. For installation and fixation of the angular displacement sensor 800, the guide vane shaft 300 to which the angular displacement sensor 800 is fixedly mounted is configured to be longer than the other guide vane shafts 300 without the angular displacement sensor 800.

The angular displacement sensor 800 may transmit some information parameters such as angular momentum and voltage to the control center wirelessly or wirelessly.

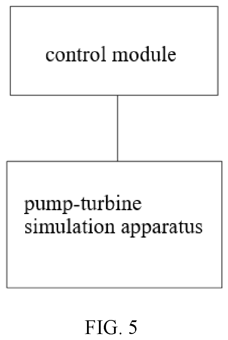

As shown in FIG. 5, the embodiments of the present application further provide a pump-turbine simulation system including the above-described pump-turbine simulation apparatus and a control module. The driving assembly 60 is connected to the control module, and the control module is configured to control the driving assembly 60 to drive the driving ring 500 to rotate based on the information on the working conditions of the pump-turbine simulation apparatus.

It should be understood that, since the pump-turbine simulation system includes the pump-turbine simulation apparatus of the embodiment or the combination of the embodiments described above, it has at least some or all of the benefits of the pump-turbine simulation apparatus of the above embodiments, and details will not be described here.

The embodiments of the present application further provide a control method for the pump-turbine simulation apparatus described above, the control method includes the following steps.

S10 includes obtaining information on the working conditions of the pump-turbine simulation apparatus.

The information on the working conditions includes flow rate, output power, input power, efficiency of the pump-turbine simulation apparatus, and the like. At this point, the obtained information on the working conditions is at least one of the above information types. The information on the working conditions may be acquired by other monitoring devices and fed back to the control center.

S40 includes adjusting a size value of a guide vane opening of the pump-turbine simulation apparatus based on the information on the working conditions.

The adjusting the size value of the guide vane opening of the pump-turbine simulation apparatus includes controlling the driving assembly 60 to rotate the guide vanes 400 through the control module, to adjust the opening size between adjacent guide vanes 400.

Further, in some embodiments, the angular displacement sensor 800 is provided on at least two guide vane shafts 300 of the pump-turbine simulation apparatus, and the control method includes the following steps.

S30 includes obtaining the size value of the guide vane opening of the pump-turbine simulation apparatus before adjusting the size value of the guide vane opening of the pump-turbine simulation apparatus based on the information on the working conditions.

S30 of the obtaining the size value of the guide vane opening of the pump-turbine simulation apparatus includes the following steps.

S400 includes obtaining a first voltage of the angular displacement sensor 800 on the guide vane shaft 300 of the pump-turbine simulation apparatus.

The guide vanes 400 of the pump-turbine model in the pump-turbine testing are connected to the guide vane shafts 300, the guide vanes 400 rotate along with the guide vane shafts 300, and the angular displacement sensor 800 provided on at least two guide vane shafts 300. By monitoring the rotational angles of the guide vane shafts 300, the rotational angles of the guide vanes 400 can be monitored. The first voltage of the angular displacement sensor 800 is related to the rotational angle of the guide vane shaft 300 provided with the angular displacement sensor 800 and the angle at which this guide vane shaft 300 is located.

The first voltage is a voltage at which the angular displacement sensor is at a stable value for a certain period of time. The change in the voltage of the angular displacement sensor 800 is related to the movement of the guide vane shaft 300. When the guide vane shaft 300 is still, it indicates that the guide vane shaft 300 is in a fixed state. That is, it is ensured that the guide vane shaft 300 (guide vane 400) is in a non-moving state, so that the size value of the guide vane opening is accurately obtained based on the first voltage.

S500 includes determining the size value of the guide vane opening of the pump-turbine simulation apparatus based on the first voltage.

By predetermining the conversion relationship between the size value of the guide vane opening and the first voltage, the size value of the guide vane opening can be determined accordingly based on the first voltage.

It should be understood that the control method determines the size value of the guide vane opening of the pump-turbine simulation apparatus by obtaining the first voltage of the angular displacement sensor 800 on the guide vane shaft 300 of the pump-turbine simulation apparatus. That is, by the control method, it is possible to monitor the size value of the guide vane opening in the pump-turbine model testing, and further, it is possible to accurately control the opening size of the movable guide vane 400 so as to control the related parameters and performance of the pump turbine, thereby ensuring the accuracy of the test result.

In some embodiments, S500 of the determining an angle value of the guide vane opening of the pump-turbine simulation apparatus based on the first voltage, includes the following steps.

S520 includes determining the angle value of the guide vane opening corresponding to the first voltage based on the first voltage.

Herein, the angle value of the guide vane opening is a degree of an angle included between two adjacent guide vanes 400. The pump-turbine model has a plurality of movable guide vanes 400 disposed equidistantly, the movable guide vanes 400 are disposed on the guide vane shafts 300, and all of the movable guide vanes 400 are oriented consistently at initial installation. Therefore, the angle included between any two adjacent guide vanes 400 of the pump-turbine model is the angle value of the guide vane opening of the pump-turbine model.

During the test, all of the movable guide vanes 400 of the pump-turbine model moves consistently. As the guide vane shaft 300 rotates, the angle value of the guide vane opening changes accordingly, and the voltage of the angular displacement sensor 800 changes and finally stabilizes.

S540 includes determining the size value of the guide vane opening based on the angle value of the guide vane opening.

Herein, since all of the movable guide vanes 400 of the pump-turbine model moves consistently. Therefore, each fixed angle value of the guide vane opening corresponds to a determined size value of the guide vane opening. As such, when the angle value of the guide vane opening is determined, the size value of the guide vane opening is determined accordingly based on a conversion relationship therebetween.

In some embodiments, S520 of the determining the angle value of the guide vane opening corresponding to the first voltage based on the first voltage, includes:

S521, determining the angle value of the guide vane opening corresponding to the first voltage, based on a first conversion relationship and the first voltage.

Herein, the first conversion relationship may be a function relationship between the first voltage and the angle value of the guide vane opening, and in the case where the first voltage is known, the angle value of the guide vane opening may be obtained based on the first voltage.

The first conversion relationship may also be an interval correspondence relationship, for example, when the first voltages are within a voltage interval range, the first voltages within the voltage interval range all correspond to a same angle value of the guide vane opening.

In some embodiments, the control method further includes the following steps.

S100 includes, before obtaining the first voltage of the angular displacement sensor 800 on the guide vane shaft 300 of the pump-turbine simulation apparatus, determining the first conversion relationship based on a plurality of pretested first voltages and the angle value of the guide vane opening corresponding to each of the plurality of pretested first voltages.

In the non-experimental process, the guide vane shaft 300 is independently controlled to rotate by a certain angle to obtain the first voltage of the angular displacement sensor 800 on the guide vane shaft 300 at this time, and the angle value of the guide vane opening at this time and the first voltage corresponding thereto are recorded. Repeating the above actions to obtain at least five groups of the angle values of the guide vane opening and the first voltages. Storing the at least five groups of the angle values of the guide vane opening and the first voltages in advance in a corresponding processing center. The processing center fits the at least five groups of the angle values of the guide vane opening and the first voltages to obtain a function relationship between the angle value of the guide vane opening and the first voltage. According to this function relationship, in the case where the first voltage is known, the angle value of the guide vane opening corresponding thereto can be determined.

It should be noted that both the above-obtained angle value of the guide vane opening and the first voltage are actually measured and obtained.

In some embodiments, the control method further includes the following steps.

S100 includes, before obtaining the first voltage of the angular displacement sensor 800 on the guide vane shaft 300 of the pump-turbine simulation apparatus, obtaining the plurality of first voltages and the angle value of the guide vane opening corresponding to each of the plurality of first voltages by simulation or testing.

It should be noted that the plurality of first voltages and the angle value of the guide vane opening corresponding to each of the plurality of first voltages are obtained by simulation, that is, by simulation software. The performance parameters of the angular displacement sensor 800 are input into the simulation software, and at least five groups of the first voltages and the angle values of the guide vane opening corresponding thereto are obtained by the simulation software.

The plurality of first voltages and the angle value of the guide vane opening corresponding to each of the plurality of first voltages are measured and recorded multiple times by a test system of the pump-turbine simulation apparatus, by test.

S200 includes determining the first conversion relationship based on the plurality of first voltages and the angle value of the guide vane opening corresponding to each of the plurality of first voltages.

The processing center fits the data obtained by the test system/simulation software to obtain the function relationship between the angle value of the guide vane opening and the first voltage, that is, the first conversion relationship. According to this function relationship, in the case where the first voltage is known, the angle value of the guide vane opening corresponding thereto can be determined.

In some embodiments, S540 of the determining the size value of the guide vane opening based on the angle value of the guide vane opening, includes:

S541, determining the size value of the guide vane opening based on a second conversion relationship and the angle value of the guide vane opening.

Herein, the second conversion relationship may be a function relationship between the size value of the guide vane opening and the angle value of the guide vane opening, that is, the second conversion relationship. According to this function relationship, in the case where the angle value of the guide vane opening is known, the size value of the guide vane opening corresponding thereto can be determined.

In some embodiments, the control method further includes the following steps.

S310 includes, before obtaining the first voltage of the angular displacement sensor 800 on the guide vane shaft 300 of the pump-turbine simulation apparatus, obtaining the plurality of angle values of the guide vane opening and the size value of the guide vane opening corresponding to each of the plurality of angle values of the guide vane opening based on the simulation software.

Herein, the state of the two adjacent guide vanes 400 corresponding to the angle value of the guide vane opening can be simulated by the simulation software, and the angle value of the guide vane opening between the two adjacent guide vanes 400 can be determined. At least ten groups of the angle values of the guide vane opening and the size values of the guide vane opening corresponding thereto are obtained through simulation software.

S320 includes determining the second conversion relationship based on the plurality of angle values of the guide vane opening and the size value of the guide vane opening corresponding to each of the plurality of angle values of the guide vane opening.

Herein, based on the at least ten groups of the angle values of the guide vane opening and the size values of the guide vane opening corresponding thereto, the processing center fits the at least ten groups of the angle values of the guide vane opening and the size values of the guide vane opening corresponding thereto to obtain a function relationship between the angle value of the guide vane opening and the size value of the guide vane opening. Based on the function relationship, the size value of the guide vane opening can be determined if the angle value of the guide vane opening is known.

In some embodiments, the control method includes:
S520, determining the angle value of the guide vane opening corresponding to the first voltage based on the first voltage;
S540, determining the size value of the guide vane opening based on the angle value of the guide vane opening; and
S600, determining an actual size value of the guide vane opening based on a preset compensation angle value of the guide vane opening.

Herein, the actual size value of the guide vane opening satisfies: *S* = *S*₀ ± *f* ; Where, *S* is the actual guide vane opening value, *S₀* is the size value of the guide vane opening, and *f* is the compensation angle value of the guide vane opening.

Herein, *f* satisfies: $f = \sqrt{{f}_{1}^{2} + {f}_{2}^{2}}$*.*

Herein, *f*₁ is an installation error compensation value of the guide vane; and *f*₂ is a testing error of the angular displacement sensor.

In order to obtain the installation error compensation value of the guide vane, when the pump-turbine model is assembled, the size value of the guide vane opening between the adjacent guide vanes 400 is measured as *γ*₁, *γ*₂*, γ*₃*,* ··· *γₙ*. An average value *γ̅* is obtained by $\overline{γ} = \frac{{γ}_{1} + {γ}_{2} + … + {γ}_{n}}{n}$, based on the measured size value of the guide vane opening. A maximum error Δ*γ*ₘₐₓ of the size value of the guide vane opening can be calculated based on the average value. There are two calculation methods for the maximum error Δ*γ*ₘₐₓ, one is that the maximum size value of the guide vane opening value minus the average value of the guide vane opening, i.e., Δ*γ*ₘₐₓ = *γ*ₘₐₓ - *γ̅*; and another is that the average value of the guide vane opening minus the minimum value of the guide vane opening, i.e., Δ*γ*ₘₐₓ = *γ̅* - *γ*ₘᵢₙ. The installation error compensation value of the guide vane can be obtained as ${f}_{1} = \frac{Δ {γ}_{max}}{\overline{γ}}$ based on the above data, where the maximum error Δ*γ*ₘₐₓ is taken the greatest one from Δ*γ*ₘₐₓ = *γ*ₘₐₓ *-* and Δ*γ*ₘₐₓ = *γ̅ - γ*ₘᵢₙ.

Herein, in order to obtain the testing error of the angular displacement sensor, based on the conversion relationship between the size value of the guide vane opening and the angle value of the guide vane opening in the foregoing embodiments, the angle value *α* of the guide vane opening corresponding to the average value *γ̅* is determined based on the average value *γ̅*; by calibrating the coefficient *α*₁, *α*₂, *α*₀ of the angular displacement sensor and the voltage value *V* at this time of the angular displacement sensor 800, the angle value of the guide vane opening can be measured as *αᵥ* = *α*₁*V + α*₂*V² + α*₀ from the angular displacement sensor 800; and the testing error of the angular displacement sensor can be obtained based on the above data as ${f}_{2} = \frac{{α}_{V} - α}{α}$.

That is, *f* satisfies: $f = \sqrt{{\left(\frac{Δ {γ}_{max}}{\overline{γ}}\right)}^{2} + {\left(\frac{{α}_{V} - α}{α}\right)}^{2}}$

In some embodiments, S500 of the determining the size value of the guide vane opening of the pump-turbine simulation apparatus based on the first voltage, includes:

S520, determining the size value of the guide vane opening corresponding to the first voltage based on a third conversion relationship and the first voltage.

Herein, a plurality of groups of the first voltages and the size values of the guide vane opening corresponding thereto can be obtained by simulation, and the processing center fits a function relationship between the first voltage and the size value of the guide vane opening, that is, a third conversion relationship, based on the data obtained by simulation. According to this function relationship, in the case where the first voltage is known, the size value of the guide vane opening can be determined.

Herein, a plurality of groups of the first voltages and the size values of the guide vane opening corresponding thereto can be obtained by pre-measurement, and the processing center fits the plurality of groups of the first voltages and the size values of the guide vane opening corresponding thereto to obtain a function relationship between the first voltage and the size value of the guide vane opening. Based on this function relationship, in the case where the first voltage is known, the size value of the guide vane opening is determined.

## Claims

1. A pump-turbine simulation apparatus, comprises:
a model top cover;
a plurality of crank arms, wherein the plurality of crank arms are arranged at equal intervals along a circumferential direction of the model top cover, an end of each of the plurality of crank arms is hinged to the model top cover, a guide vane shaft is fixedly connected to the each of the plurality of crank arms, the guide vane shaft is extended through the model top cover along a thickness direction of the module top cover, and the guide vane shaft is rotatably connected to the model top cover;
a plurality of guide vanes, wherein each of the plurality of guide vanes is fixedly connected to a corresponding one guide vane shaft, and the plurality of guide vanes are located on a side of the model top cover away from the plurality of crank arms;
a driving ring disposed around the module top cover, wherein another end of the each of the plurality of crank arms is fixedly connected to the driving ring; and
a driving assembly configured to drive the driving ring to rotate about a center of the driving ring.

2. The pump-turbine simulation apparatus of claim 1, wherein the driving assembly comprises:
a driving rod, wherein an end of the driving rod is connected to the driving ring; and
a driving member, wherein the driving member is connected to another end of the driving rod, the driving member is configured to drive the driving rod to move in a first direction to drive the driving ring to rotate.

3. The pump-turbine simulation apparatus of claim 2, wherein the driving rod is configured to reciprocate between a first position and a second position.

4. The pump-turbine simulation apparatus of claim 3, wherein the driving assembly further comprises a supporting member, the driving rod is slidably connected to the supporting member, the supporting member is provided with a first stoper and a second stoper spaced apart, and the first stoper and the second stoper are configured to limit a movable range of a side of the driving rod between the first position and the second position.

5. The pump-turbine simulation apparatus of claim 4, wherein the driving rod is provided with a braking member between the first stoper and the second stoper, the braking member abuts the first stoper when moving to the first position, and the braking member abuts the second stoper when the driving rod moves to the second position.

6. The pump-turbine simulation apparatus of claim 5, wherein the first stopper is a first potentiometer, and a first contact is provided on the first potentiometer;
the second stoper is a second potentiometer, and a second contact is provided on the second potentiometer; and
the first potentiometer and the second potentiometer are both connected to the driving member, and the braking member is configured to contact the first contact and the second contact, and the driving member stops driving the driving rod once the braking member contacts either of the first contact and the second contact.

7. The pump-turbine simulation apparatus of claim 5, wherein the supporting member is provided with a sliding groove, the driving rod is disposed in the sliding groove, the first stoper and the second stoper are spaced at a top of the sliding groove, and the braking member is disposed on the driving rod and between the first stoper and the second stoper.

8. The pump-turbine simulation apparatus of claim 1, wherein an angular displacement sensor is provided on at least two guide vane shafts of the pump-turbine simulation apparatus.

9. A pump-turbine simulation system, comprising:
a pump-turbine simulation apparatus according to any one of claims 1 to 8; and
a control module, wherein the driving assembly is connected to the control module, and the control module is configured to control the driving assembly to drive the driving ring to rotate based on working conditions of the pump-turbine simulation apparatus.

10. A control method, configured to control the pump-turbine simulation system of claim 9, comprising: obtaining information on the working conditions of the pump-turbine simulation apparatus; and
adjusting a size value of a guide vane opening of the pump-turbine simulation apparatus based on the information on the working conditions.
